(19) Europäisches Patentamt
European Patent Office
Office européen des brevets

(11) **EP 3 851 358 A1**

(12) **EUROPEAN PATENT APPLICATION**

(43) Date of publication:
**21.07.2021 Bulletin 2021/29**

(51) Int Cl.:
***B61L 25/08*** *(2006.01)*    ***B61L 27/00*** *(2006.01)*

(21) Application number: **20195010.2**

(22) Date of filing: **08.09.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(30) Priority: **17.01.2020   JP 2020006035**

(71) Applicant: **Kabushiki Kaisha Toshiba**
**Minato-ku**
**Tokyo (JP)**

(72) Inventors:
• **OTSUKI, Tomoshi**
  **Tokyo (JP)**
• **KUBO, Hideki**
  **Kanagawa (JP)**

(74) Representative: **Moreland, David**
**Marks & Clerk LLP**
**Aurora**
**120 Bothwell Street**
**Glasgow G2 7JS (GB)**

(54) **INFORMATION PROCESSING APPARATUS, INFORMATION PROCESSING METHOD,
COMPUTER PROGRAM, AND METHOD**

(57)    According to one approach, an information processing apparatus includes a platform selector configured to select a platform occupied by a vehicle from a plurality of platforms based on platform information including the plurality of platforms and occupation information including a time period in which at least one vehicle occupies at least one of the platforms.

FIG. 1

EP 3 851 358 A1

**Description**

FIELD

Approaches described herein relates to an information processing apparatus, a method for the same, a computer program, and a method.

BACKGROUND

Trains approaching a railway station will stop at one platform and leave after stopping. A train occupies a platform from the time it stops until it leaves. If a platform is shared by more than one type of train, it is necessary to decide which platform the train will use. From the viewpoint of minimization of the influence of a delay and improvement of convenience for passengers, it is important for a railway company or the like to determine which platform is selected for which train. The same holds true about vehicles (a bus, an airplane, and the like) other than the train.

BRIEF DESCRIPTION OF THE DRAWINGS

FIG. 1 is a block diagram of a platform schedule creation apparatus, which is an information processing apparatus according to an approach;
FIG. 2 shows a simple example of a transport schedule;
FIG. 3 planarly shows an example of the structure of a station and the vicinity of the station;
FIG. 4 shows an example of platform information for a current station in certain one day;
FIG. 5 shows an example of occupation information for the current station in certain one day;
FIGS. 6A and 6B show specific examples of arrival-arrival time intervals, arrival-leave time intervals, leave-arrival time intervals, and leave-leave time intervals between platforms;
FIG. 7 shows a specific example of time interval information;
FIG. 8 shows an example of platform designation information;
FIG. 9 shows a determination example of a kind of a time interval;
FIG. 10 shows a calculation example of element cost of a time interval;
FIG. 11 shows an example of a platform schedule generated by a platform schedule optimizer;
FIGS. 12A to 12C show examples of neighbor operation;
FIGS. 13A to 13D are diagrams for explaining specific examples of platform schedule creation;
FIG. 14 shows an example of an allocation result in the case in which a greedy method is used as a comparative example;
FIG. 15 shows an example of an allocation result in this approach;
FIG. 16 shows an example of a display screen of an output device;
FIG. 17 shows an example in which information concerning platforms of trains is added to a transport schedule;
FIG. 18 is a flowchart of an example of the operation of the platform schedule creation apparatus;
FIG. 19 is a detailed flowchart of step S12 in FIG. 18; and
FIG. 20 is a hardware configuration diagram of the platform schedule creation apparatus (the information processing apparatus) according to this approach.

DETAILED DESCRIPTION

According to one approach, an information processing apparatus includes a platform selector configured to select a platform occupied by a vehicle from a plurality of platforms based on platform information including the plurality of platforms and occupation information including a time period in which at least one other vehicle occupies at least one of the platforms.
Below, approaches of the present invention are explained with reference to the accompanying drawings.

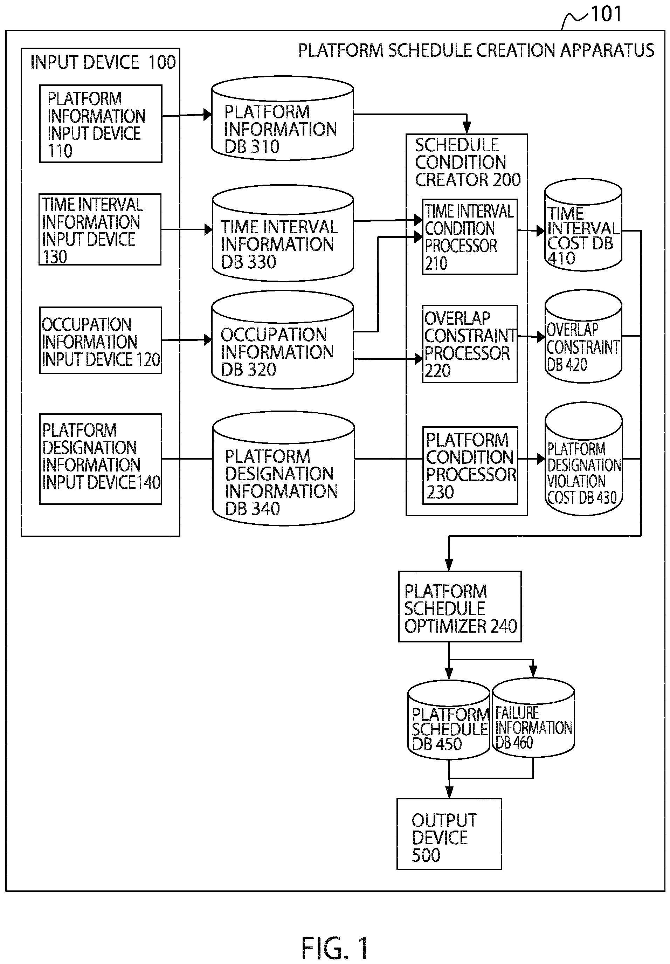

FIG. 1 is a block diagram of a platform schedule creation apparatus 101 (hereinafter, the apparatus 101), which is an information processing apparatus according to this approach. The apparatus 101 selects, based on platform information including a plurality of platforms in a depot and occupation information including a time period in which at least one vehicle arriving at the depot occupies a platform, the platform occupied by the vehicle out of the plurality of platforms. Selecting the platform occupied by the vehicle in this way is referred to as platform scheduling. Selecting a platform for a vehicle when the vehicle needs to occupy a platform for a certain time period in a depot including a plurality of platforms is referred to as allocating the platform to the vehicle for the certain time period or allocating occupation by the vehicle in the certain time period to the platform.

The vehicle in this approach is assumed to be a railway train. In this case, the depot is a station. The platform is equivalent to a getting on/off place provided in a platform of the station. However, the vehicle is not limited to the train and may be a bus, a ship, an airplane, or the like. In the case of the bus, the depot corresponds to a bus stop and the platform corresponds to a terminal. In the case of the ship or the airplane, the depot and the platform are defined as in the case of the bus.

In the following explanation, a platform schedule of a railway is created for a certain station (a current station). As a premise, a transport schedule of the railway is given in advance. The transport schedule includes IDs of a plurality of trains, information concerning stations (stop positions) where the trains stop, times of day when the trains arrive at the stop positions, times of day when the trains leave from the stop positions, and times of day when the trains arrive at the stop positions (or times of day when the trains pass the stop positions).

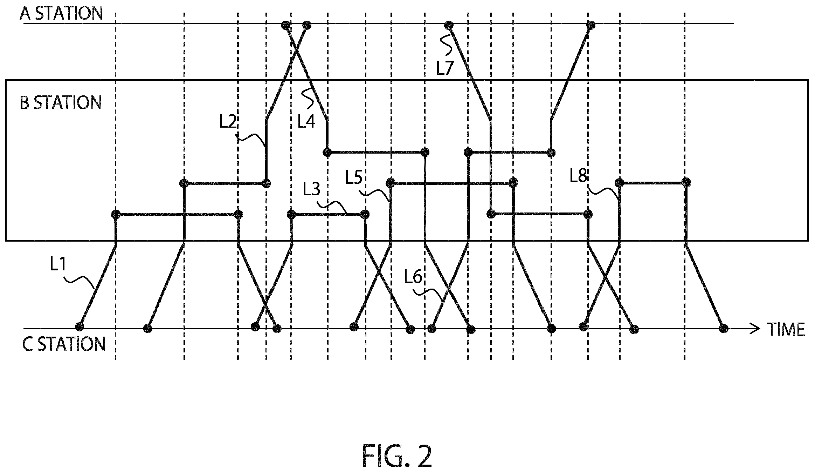

FIG. 2 shows a simple example of a transport schedule. Eight train lines L1 to L8 are shown. The train line is data including, about the same train and about an operation route including one or a plurality of stop positions, at least one of times of day when the train leaves the stop positions, times of day when the train arrives at the stop positions, and times of day when the train passes the stop positions. In the example shown in FIG. 2, trains of the train lines leave an A station or a C station and arrive at and stop in a B station and, thereafter, leave toward the A station or the C station and arrive at the A station or the C station.

In the transport schedule, it is determined at which times of day the trains of the train lines arrive at the B station and at which times of day the trains of the train lines leave from the B station. That is, time periods in which the trains stay in the B station are determined. However, when a plurality of platforms are present in the B station, in the schedule, it is not determined which platforms in the B station the trains use. The same applies to the A station and the C station. The following explanation focuses on the B station.

In a station including a large number of platforms, on an entrance side or an exit side of the station, a railway line complicatedly branches at points. Such a railway line structure is sometimes called complicated linear structure. In the case of the complicated linear structure, trains cannot freely approach and leave a platform. In a large station, ten or more platforms are sometimes shared by a plurality of routes.

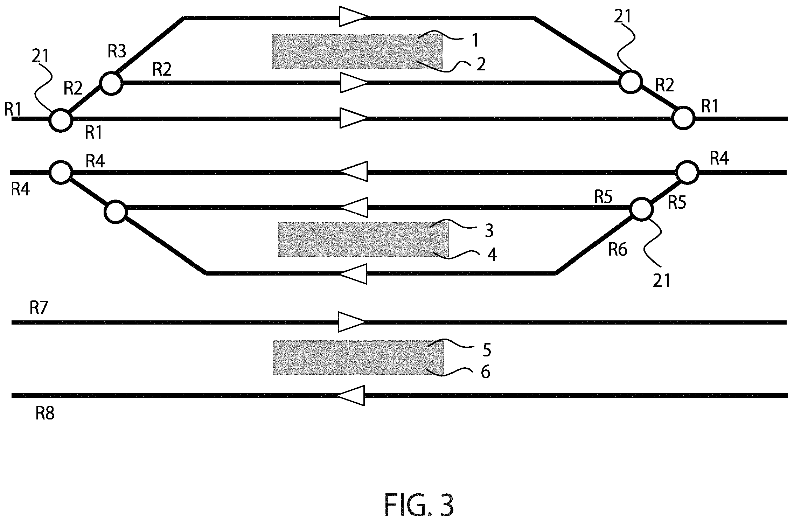

FIG. 3 planarly shows an example of the structure of a station and the vicinity of the station. Railway lines are divided or integrated by a plurality of points 21. Black thick lines assigned with signs including R represent the railway lines. Arrows along the railway lines indicate traveling directions of trains. For example, a traveling direction of a railway line R1 is a right direction. The railway line R1 is divided into a railway line R1 and a railway line R2 by the points 21 (the same sign is used for a railway line before the division and one of railway lines after the division). Rectangles represent platforms. Each of the platforms includes two platforms, that is, a platform along a railway line on an upper side and a platform along a railway line on a lower side. More specifically, a rectangle at the top includes a platform 1 and a platform 2, a second rectangle from the top includes a platform 3 and a platform 4, and a rectangle at the bottom includes a platform 5 and a platform 6. A railway line R7 and a railway line R8 are independent railway lines that are neither divided nor integrated. The structure shown in FIG. 3 is only an example. There are other various structures.

Depending on a combination of platforms, there is a constraint that trains have to approach the platforms at an interval of a fixed time period because of a security reason, point switching, or the like. There is sometime also a constraint that this platform is desired to be used for a certain train or this platform always needs to be used for a certain train.

In this approach, platforms are respectively allocated to a plurality of trains that respectively need to occupy the platforms for certain time periods based on the constraints. That is, occupation by the plurality of trains is allocated to any one of a plurality of platforms. In this case, time periods of occupation in the same platform are prevented from overlapping. The occupation of a platform means occupying the platform for a time period from entrance time of day (arrival time of day at the platform) to the platform to exit time of day (leave time of day from the platform). Arriving at the platform is sometimes called arrival event and leave from the platform is sometimes called leave event.

The platform schedule creation apparatus 101 shown in FIG. 1 includes an input device 100, a platform determiner (a platform selector) 102, an output device 500, and various databases (DBs). The platform determiner 102 includes a schedule condition creator 200 and a platform schedule optimizer 240. The various DBs include a platform information DB 310, a time interval information DB 330, an occupation information DB 320, a platform designation information DB 340, a time interval cost DB 410, an overlap constraint DB 420, a platform designation violation cost DB 430, a platform schedule DB 450, and a failure information DB 460.

The input device 100 includes a platform information input device 110, an occupation information input device 120, a time interval information input device 130, and a platform designation information input device 140.

Platform information is input to the platform information input device 110. The input platform information is stored in the platform information DB 310.

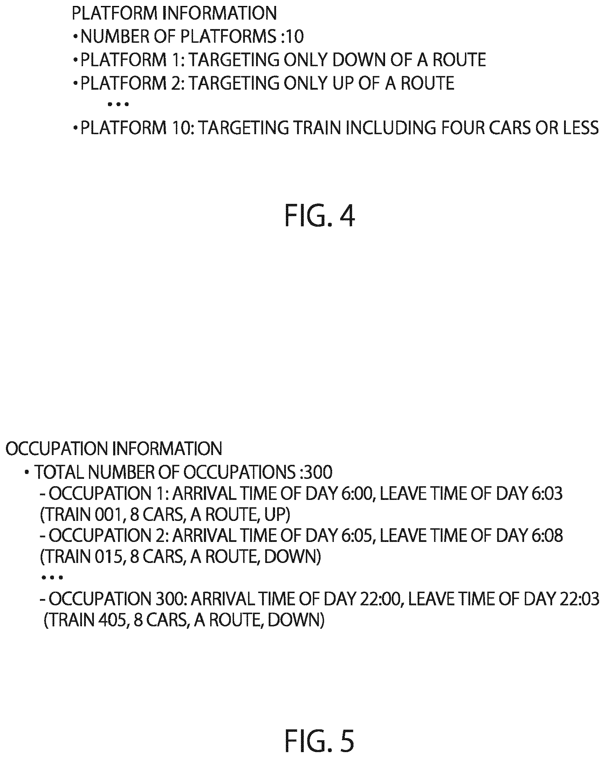

FIG. 4 shows an example of the platform information. The platform information shown in FIG. 4 is platform information for a current station in certain one day. The platform information includes information concerning a plurality of platforms in a station (a depot). Specifically, the platform information DB 310 includes a total number of platforms. The platform information may include information designating an attribute of a train that can use a platform. In this case, the designating information functions as a constraint for allocating the platform having the designated attribute to the platform.

Examples of attribute information of a train include a route, a form, a moving direction, a type, regular/irregular, a traveling classification, and the number of cars. The route represents a section of a railway line in which the train can travel. The form represents a shape or a type of the train. The moving direction represents an up direction or a down direction. The type represents local, express, rapid, and the like. The regular/irregular represents a regular train, operation date and time of which is fixed, or an irregular train, operation date and time of which is not fixed. The traveling classification represents out-of-service, trial run, special, and the like. The number of cars is the number of cars configuring a formation of the train.

Occupation information is input to the occupation information input device 120. The input occupation information is stored in the occupation information DB 320.

FIG. 5 shows an example of occupation information for a current station in certain one day. The occupation information includes a plurality of occupations. In this example, the occupation information includes occupation 1 to occupation 300. The occupations include an ID of a train and information concerning a time period in which the train occupies a platform of the current station. The information concerning the time period includes arrival time of day and leave time of day.

The occupation may include attribute information of the train. As in the case of the platform information, an example of the attribute information includes a route, a form, a moving direction, a type, regular/irregular, a traveling classification, and the number of cars.

The occupation information includes a total number of occupations. In this example, the total number is three hundred. The total number of occupations is equivalent to the number of trains leaving from and arriving at or passing the current station in one day.

In the example shown in FIG. 5, the occupations include IDs of trains. However, the occupations may not include IDs of trains. When the current station is a starting station of a train, occupation by the train may not include arrival time of day. When the current station is a terminal station of a train, occupation by the train may not include leave time of day.

Information (time interval information) of a constraint of a time interval among a plurality of time periods in which the same or different platforms are occupied is input to the time interval information input device 130. That is, the time interval information is information concerning a time interval between occupations of the same or different platforms. The input time interval information is stored in the time interval information DB 330. The time interval information defines a constraint of a time interval in the case in which a plurality of trains approach and/or leave one or a plurality of platforms. The time interval information is explained below.

In order to safely approach and leave the platform between successive occupancies within the same platform or between occupancies of different platforms, it is common to take an extra time in addition to the above interval time. Therefore, the time interval between the preceding train and the continuing train on the actual timetable is equal to the time interval value plus the margin time. In addition, railway signals control the time interval between the passage of the preceding train and the passage of the following train, and this constant time interval is equivalent to the time interval when the train cannot enter the station.

For example, it is conceived that a train approaches to a platform b1 or a platform b2 according to switching of a certain divider (a point). After a certain train leaves the platform b1, because of a security reason, a fixed time interval (a leave and arrival time interval explained below) needs to be spaced for the next train to approach the same platform b1.

Occupation of a platform is started by an arrival event and ended by a leave event. Therefore, as kinds of time intervals for a pair of occupations, there are four kinds of an arrival-arrival time interval, an arrival-leave time interval, a leave-arrival time interval, and a leave-leave time interval based on combinations of time of day of an arrival event or a leave event of certain occupation and time of day of an arrival event or a leave event of another occupation.

The arrival-arrival time interval is a time interval between time of day of arrival at one of two platforms (the two platforms may be the same) and time of day of arrival at the other platform. That is, the arrival-arrival time interval corresponds to a time interval between arrival time of day of a vehicle that occupies one of a plurality of time periods of occupation of the same or different platforms and arrival time of day of a vehicle that occupies the other of the plurality of time periods.

The arrival-leave time interval is a time interval between time of day of arrival at one of two platforms and time of day of leave from the other platform. That is, the arrival-leave time interval corresponds to a time interval between arrival time of day of a vehicle that occupies one of a plurality of time periods and leave time of day of a vehicle that occupies the other of the plurality of time periods.

The leave-arrival time interval is a time interval between time of day of leave from one of two platforms and time of day of arrival at the other platform. That is, the leave-arrival time interval corresponds to a time interval between leave time of day of a vehicle that occupies one of a plurality of time periods and arrival time of day of a vehicle that occupies the other of the plurality of time periods.

The leave-leave time interval is a time interval between time of day of leave from one of two platforms and time of day of leave from the other platform. That is, the leave-leave time interval corresponds to a time interval between leave time of day of a vehicle that occupies one of a plurality of time periods and leave time of day of a vehicle that occupies the other of the plurality of time periods.

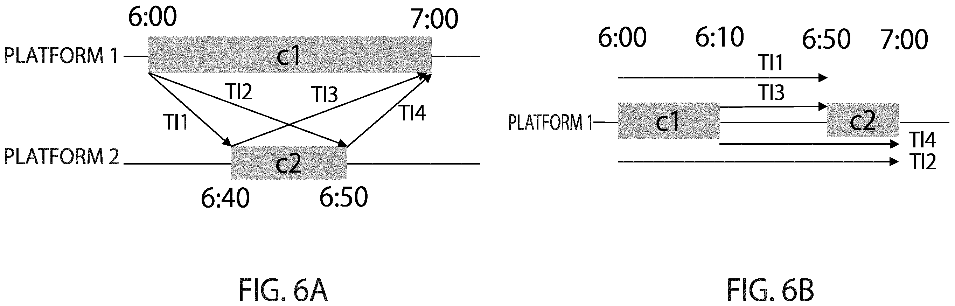

FIG. 6A shows a specific example of an arrival-arrival time interval, an arrival-leave time interval, a leave-arrival time interval, and a leave-leave time interval between different platforms. Occupation c1 of a train 1 occupies a platform 1 at 6:00 to 7:00 and occupation c2 of a train 2 occupies a platform 2 at 6:40 to 6:50. The horizontal axis indicates time of day. In this case, an arrival-arrival time interval TI1 is forty minutes, an arrival-leave time interval TI2 is fifty minutes, a leave-arrival time interval TI3 is forty minutes, and a leave-leave time interval TI4 is ten minutes.

FIG. 6B shows a specific example of an arrival-arrival time interval, an arrival-leave time interval, a leave-arrival time interval, and a leave-leave time interval in the same platform. The occupation c1 of the train 1 occupies the platform 1 at 6:00 to 6:10 and the occupation c2 of the train 2 occupies the platform 1 at 6:50 to 7:00. The horizontal axis indicates time of day. In this case, the arrival-arrival time interval TI1 is fifty minutes, the arrival-leave time interval TI2 is sixty minutes, the leave-arrival time interval TI3 is forty minutes, and the leave-leave time interval TI4 is fifty minutes.

As constraints for a time interval, two kinds of conditions, that is, a minimum time interval n and an allowable time interval m, are defined for the respective kinds of time intervals. The minimum time interval is a time interval (a first time interval) that has to be at least spaced between occupations of a platform. The allowable time interval is a time interval (a second time interval) that is desirably spaced as much as possible between the occupations of the platform, that is, a time interval that is recommended to be spaced between the occupations of the platform. Here, m is larger than n.

The arrival-arrival time interval, the arrival-leave time interval, the leave-arrival time interval, and the leave-leave time interval may be defined in combination with moving directions (up or down) of trains. Moving directions of two trains being the same is defined as "same-direction" and the moving directions being different is defined as "opposite-direction". A time interval in the case of the pair of same moving direction of the trains is referred to as "same-direction" time interval and a time interval in the case of different moving directions of the trains is referred to as "opposite-direction" time interval.

An example of a time interval in the same direction is "minimum headway" which means the shortest time the system can achieve without reducing the speed of the vehicles. Another example of a time interval in the opposite direction is the junction margin, meaning the minimum time interval allowed between two trains in opposite directions moving in opposite directions at a station, junction or other point. A typical definition of junction margin is given in the UK TPR (Time Planning Regulations).

For example, the leave-leave time interval is explained. The leave-leave time interval in the case in which a train leaving from one of two platforms is up and a train leaving from the other is down is represented as a leave-leave continuation time interval. The leave-leave time interval in the case in which the train leaving from one of the two platforms is up (or down) and the train leaving from the other is also up (or down) is represented as a leave-leave continuation time interval.

As kinds of time intervals, there are 4x2=8 kinds based on four kinds of the arrival-arrival time interval, the arrival-leave time interval, the leave-arrival time interval, and the leave-leave time interval and two kinds of the "same-direction" and the "opposite-direction".

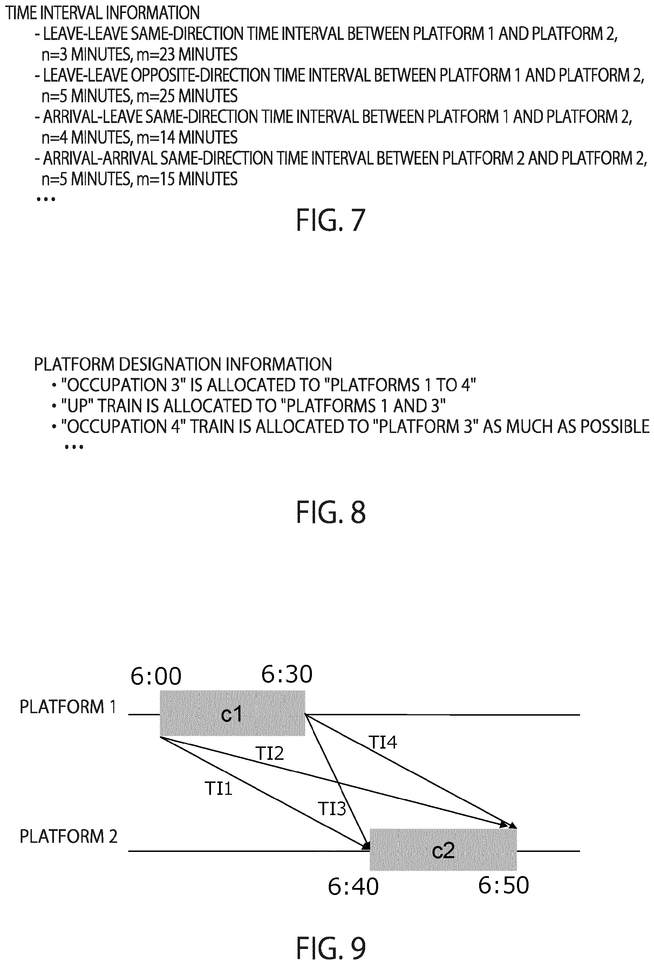

FIG. 7 shows a specific example of time interval information. One or more kinds of time intervals and the minimum time interval n and the allowable time interval m are set with respect to a set of platforms. Constraints may be separately decided for each of the kinds of the time intervals when a traveling direction of a train leaving from a platform to which one occupation is allocated and a traveling direction of a train leaving from the other platform are the same and when the traveling directions are different in this way. In other words, there are a constraint in the case in which a traveling direction of a vehicle that occupies one of a plurality of time periods in which the same or different platforms are occupied and a traveling direction of a vehicle that occupies the other of the plurality of time periods are the same and a constraint in the case in which a traveling direction of a vehicle that occupies one of a plurality of time periods and a traveling direction of a vehicle that occupies the other of the plurality of time periods are different. These constraints may be separately defined for each of the kinds of the time intervals.

Note that, when a certain train turns back in the current station, at an arrival time of the train, the moving direction is "up" (or "down") and, at a leave time of the train, the moving direction is "down" (or "up"). The moving directions are different at the arrival and the leave.

It could occur that a train passes the current station without stopping at the current station. In this case, time intervals such as an arrival-passage time interval and a passage-leave time interval may be separately defined. Alternatively, regarding that occupation in the case of passage as occupation having only leave time of day, the arrival-leave time interval, the leave-arrival time interval, and the leave-leave time interval may be defined. Further, the two kinds of the "same-direction" and the "opposite-direction" may be combined.

When a train is the first train leaving from the current station, occupation by the train in the current station may be regarded as occupation having only leave time of day. A special event for the first train may be introduced. A time interval condition may be defined based on the event for the first train.

The time interval information does not need to be decided among all platforms. The time interval information is unnecessary between independent platforms (see the railway lines R7 and R8 in FIG. 3). The independent platform means a railway line neither divided nor integrated at a point on an entrance or exit side of the current station. For example, the independent platform is one railway line neither integrated not divided from the immediately preceding station to the current station.

The time interval information such as the minimum time interval n and the allowable time interval m may be different values according to a combination of platforms. Alternatively, the time interval information may be the same value about different platforms and may be different values about the same platform.

Platform designation information is input to the platform designation information input device 140. The input platform designation information is stored in the platform designation information DB 340.

The platform designation information includes conditions for a platform to which occupation is allocated. The conditions include a desired condition and an absolute condition.

The desired condition is a constraint (a third constraint) meaning that occupation is allocated as much as possible. That is, the desired condition is a condition that should be satisfied as much as possible. A desired condition (a fourth constraint) that occupation is not allocated as much as possible may be used. In this approach, the desired condition is the constraint meaning that occupation is allocated as much as possible.

The absolute condition is a constraint (a first constraint) meaning that occupation is always allocated. That is, the absolute condition is a condition that should be always observed. An absolute condition (a second constraint) that occupation is always not allocated may be used. In this approach, the absolute condition is a constraint meaning that occupation is always allocated.

For example, when the absolute condition decides that the occupation c1 is allocated to the platform b1, the occupation c1 needs to be always allocated to the platform b1. When the desired condition decides that the occupation c2 is allocated to the platform b2, the occupation c2 is allocated to the platform b2 as much as possible (for example, if there are a plurality of platforms to which occupation can be allocated, the occupation is allocated to the platform b2). When the occupation is allocated to the other platforms, platform designation violation cost (second cost) explained below is generated to prevent a combination other than the combination of the occupation c2 and the platform b2 from being easily generated.

Note that the absolute condition may be a negation condition that the occupation c1 is never allocated to the platform b1. The desired condition may be a plural platforms designating condition that the occupation c1 is allocated to any one of the platforms b1, b2, and b3 as much as possible.

FIG. 8 shows an example of platform designation information. In the example shown in FIG. 8, '"occupation 3" is allocated to "platform 1 to 4"' means that the occupation 3 has to be allocated to any one of the platforms 1 to 4. '"Up" train is allocated to "platforms 1 and 3"' means that occupation by an up train has to be always allocated to the platform 1 or 3. '"Occupation 4" train is allocated to "platform 3" as much as possible' means that the occupation 4 is allocated to the platform 3 as much as possible but may be allocated to a platform other than the platform 3.

Besides, as explained below, a method of collectively designating conditions concerning a plurality of occupations may be adopted in a form of platform designation information for occupation having certain attribute information.

An "express" train uses the "platforms 2 and 3"

A "local" train uses the "platforms 1 and 4"

A "turn-back" train uses the platform 4

A "special" train uses the "platform 3" as much as possible

A train "bound for Yokohama" uses the "platform 3"

A "passage" train uses the "platform 2"

A "dwell" train uses the "platform 1"

A train including a "narrow car" uses the "platform 6"

A train of "12-car formation" uses the "platform 2"

A "N700-series train" uses the "platform 1"

A "trial run train" uses the "platform 2"

A "out-of-service train" uses the "platform 2".

Alternatively, oppositely to the above conditions, a negation condition 'an "express" train does not use the "platforms 2 and 3" as much as possible' may be used.

Further, the above conditions may be combined and a combination condition 'an "up" "express train" and not "bound for Yokohama area" use the platform 3 or the platform 4 as much as possible' may be set.

When there are categories of platforms, using separately designated category information (for example, the "platforms 1 and 2" are defined as sea side platforms and the "platforms 3 and 4" are defined as mountain side platforms), a condition may be set in a form of 'an "up" train uses the "mountain side platforms'" may be set.

The platform determiner (the platform selector) 102 selects, based on the platform information DB 310, the time interval information DB 330, the occupation information DB 320, and the platform designation information DB 340, platforms to be occupied by trains out of a plurality of platforms. That is, the platform determiner 102 determines platforms to be allocated to the trains. The platform determiner 102 includes the schedule condition creator 200 and the platform schedule optimizer 240. The schedule condition creator 200 includes a time interval condition processor 210, an overlap constraint processor 220, and a platform condition processor 230.

The time interval condition processor 210 calculates, based on platform information, time interval information, and occupation information, time interval cost (first cost) between all pairs of occupations. The calculated time interval cost is stored in the time interval cost DB 410.

First, the time interval condition processor 210 determines, about all the pairs of occupations, kinds of time intervals (time interval patterns) present between the occupations. The determination of the kinds of the time intervals is performed based on a combination of the "same-direction" and the "opposite-direction" and arrival and leave.

FIG. 9 shows a determination example of the kinds of the time intervals. Occupations by the two trains turning back in the current station are represented as c1 (occupation by the train 1) and c2 (occupation by the train 2). Platforms of c1 and c2 are different but may be the same. Arrival of the train 1 is arrival in the up direction and leave of the train 1 is leave in the down direction (because of turn-back). Similarly, arrival of the train 2 is also arrival in the up direction and leave of the train 2 is leave in the down direction (because of turn-back). Therefore, the following four kinds of time intervals are present between the occupations c1 and c2.

TI1: an arrival-arrival continuation time interval (an arrival-arrival continuation time interval concerning a time interval between platform 1 6:00 arrival and platform 2 6:40 arrival)
TI2: an arrival-leave opposite-direction time interval (an arrival-leave opposite-direction time interval concerning a time interval between platform 1 6:00 arrival and platform 2 6:50 leave)
TI3: a leave-arrival opposite-direction time interval (a leave-arrival opposite-direction time interval concerning a time interval between platform 1 6:30 leave and platform 2 6:40 arrival)
TI4: a leave-leave continuation time interval (a leave-leave continuation time interval concerning a time interval between platform 1 6:30 leave and platform 2 6:50 leave)

The time interval condition processor 210 calculates costs (element costs) of the kinds of the time intervals about a pair of occupations and about all the platforms. In the example shown in FIG. 9, the time interval condition processor 210 calculates element costs of the following four kinds of time intervals.

W1: element cost of the arrival-arrival continuation time interval
W2: element cost of the arrival-leave opposite-direction time interval
W3: element cost of the leave-arrival opposite-direction time interval
W4: element cost of the leave-leave continuation time interval

The calculation of the element costs of the kinds of the time intervals is performed based on values of the kinds of the time intervals and the time interval information (the minimum time interval n between platforms and the allowable time interval m between platforms) in the time interval information DB 330.

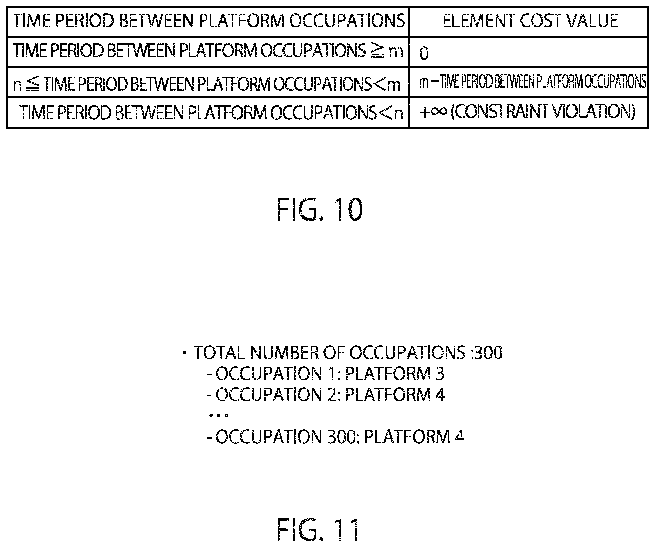

FIG. 10 shows a calculation example of the element costs of the kinds of the time intervals.

If a value of a time interval (a time period during platform occupation) is equal to or larger than the allowable time interval m between relevant platforms, the element cost is 0. That is, when the condition of the allowable time interval can be observed, the element cost is set to 0.

If the value of the time interval is equal to or larger than the minimum time interval n between platforms and smaller than the allowable time interval (the second time interval) m, the element cost is "m - the value of the time interval" ("-" is minus). That is, when the condition of the minimum time interval can be observed but the condition of the allowable time interval cannot be observed, the element cost is set to "m - the value of the time interval" (a maximum value is m).

If the value of the time interval is smaller than the minimum time interval n between the relevant platforms, the element cost is a predetermined maximum value (for example, $\alpha$). The value of the time interval being smaller than the minimum time interval n means violation of the constraint decided by the time interval information (constraint violation). This means that the condition of the minimum time interval cannot be observed. In this case, the element cost is set to infinity.

A specific example of the calculation of the element cost is explained. In the example shown in FIG. 9 explained above, the minimum time interval n between the platforms is set to 3 minutes and the allowable time interval m is set to 23 minutes.

The element cost W1 of the arrival-arrival continuation time interval concerning the platform 1 6:00 arrival and the platform 2 6:40 arrival is 0 from 6:40-6:00>23 minutes.

The element cost W2 of the arrival-leave opposite-direction time interval concerning the platform 1 6:00 arrival and the platform 2 6:50 leave is 0 from 6:50-6:00>23 minutes.

The element cost W3 of the leave-arrival opposite-direction time interval concerning the platform 1 6:30 leave and the platform 2 6:40 arrival is 23-(6:40-6:30)=13 from 6:40-6:30<23 minutes.

The element cost W4 of the leave-leave continuation time interval concerning the platform 1 6:30 leave and the platform 2 6:50 leave is 23-(6:50-6:30)=3 from 6:50-6:30<23 minutes.

For the calculation of the element cost, other methods may be used as long as the methods are based on the time interval information.

Among the kinds of the time intervals, concerning a time interval not defined in the time interval information, the element cost only has to be regarded as 0.

The time interval condition processor 210 totals the element costs of the kinds of the time intervals to thereby calculate the time interval cost (the first cost) between the pair of occupations.

In the case of the example shown in FIG. 9, the time interval condition processor 210 totals W1, W2, W3, and W4 to thereby calculate time interval cost $\mu$ (=16). The time interval cost $\mu$ is represented by an equation as $\mu$=W1+W2+W3+W4=0+0+13+3=16. The time interval cost $\mu$ is time interval cost of the pair of occupations c1 and c2 in the case in which the occupation c1 occupies the platform 1 and the occupation c2 occupies the platform 2. The total of the element costs is set as the time interval cost. However, a statistical value such as a maximum value or an average value among the element costs may be set as the time interval cost.

The pair of occupations (c1, c2) and the two platforms (b1, b2) are represented as (b1, b2, c1, c2). Time interval cost of (b1, b2, c1, c2) is represented as $\mu_{b1, b2, c1, c2}$. The two platforms (b1, b2) may be the same or may be different.

The time interval condition processor 210 calculates the time interval cost of the pair of occupations about all the platforms. Therefore, time interval costs among all the platforms are calculated about all the pairs of occupations.

Note that a sum of the time interval costs of the entire schedule can be calculated by adding up the time interval cots about all the pairs of occupations. The sum of the time interval costs is represented by an equation as indicated by Equation (1).

[Math 1]

$$\text{Sum of the time interval costs}$$
$$= \sum_{(c1,c2)\in \text{all combination of occupations}} \mu_{b(c1), b(c2), c1, c2} \quad (1)$$

where, b(c1) represents the platform of the occupation c1 and b(c2) represents the platform of the occupation c2.

The time interval condition processor 210 adds a combination (b1, b2, c1, c2) of the pair of occupations, the time interval cost of which is not 0, and the platforms to a set IntervalCombi. The time interval condition processor 210 stores the set IntervalCombi in the time interval cost DB 410.

The overlap constraint processor 220 inspects, based on the occupation information, whether there is overlap of arrival time of day and leave time of day concerning all the pairs of occupations (c1, c2). When there is overlap, the overlap constraint processor 220 adds the pair of occupations (c1, c2) to a set NGPAIR. The set NGPAIR functions as overlap constraint meaning that the pair of occupations (c1, c2) cannot be allocated to the same platform. The overlap constraint processor 220 stores the set NGPAIR in the overlap constraint DB 420 as the overlap constraint.

The platform condition processor 230 adds, based on the platform designation information in the platform designation information DB 340, (b, c), the absolute condition of which is to allocate the occupation c to the platform b, to a set PinMustCombi.

When the desired condition is to allocate occupation c to a platform b and a platform other than the desired condition is represented as b', the platform condition processor 230 creates (b', c) and adds (b', c) to a set PinPenalty-Combi. The desired condition is set to cause cost when the occupation c is allocated to the platform b' other than the platform b.

The platform condition processor 230 determines, concerning the desired condition, the platform designation violation cost (the second cost), which is cost in the case in which a platform not satisfying the desired condition is allocated to the occupation c. The determined platform designation violation cost is represented as $\lambda_{b, c}$ (the platform not satisfying the desired condition is represented by b).

The platform condition processor 230 may uniformly set the platform designation violation cost to the same value (for example, 100) with respect to all platforms not satisfying the desired condition. In this case, the platform condition processor 230 may change the platform designation violation cost according to the occupation c or may set the platform designation violation cost to the same value in all the occupations.

Alternatively, a user who is an operator or an administrator of the apparatus 101 may determine a value of the platform designation violation cost for each combination of occupation and a platform not satisfying the desired condition. The user may input the determined value from the platform designation input device 140. The input value is provided to the platform condition processor 230 via the platform designation information DB 340 or directly.

Alternatively, a value of the platform designation violation cost may be determined according to cost of movement (transfer or the like) of a passenger in the current station. Specifically, the cost may be increased according to the distance from a platform satisfying the desired condition to a platform not satisfying the desired condition. In this case, information concerning the distance between the platforms may be stored in the platform information DB 310. The information concerning the distance between the platforms may be read out from the platform information DB 310.

The platform condition processor 230 stores the set PinMustCombi, the set PinPenaltyCombi, and the platform designation violation cost $\lambda_{b,c}$ in the platform designation violation cost DB 430.

The platform schedule optimizer 240 generates a platform schedule using the time interval cost DB 410, the overlap constraint DB 420, and the platform designation violation cost DB 430. The platform schedule is a schedule for allocating any one of platforms in the current station to the occupations of the platforms indicated by the occupation information. The generated platform schedule is stored in the platform schedule DB 450. The platform schedule optimizer 240 generates failure information when occupation that cannot be allocated is present. The generated failure information is stored in the failure information DB 460.

Processing in which the platform schedule optimizer 240 creates the platform schedule is explained in detail below.

Modeling based on the following mathematical model is performed based on the information stored in the time interval cost DB 410, the overlap constraint DB 420 and the platform designation violation cost DB 430.

[Math 2]

$$\min \quad \sum_{(b1,b2,c1,c2)\in IntervalCombi} \mu_{b1,b2,c1,c2} \cdot y_{b1,b2,c1,c2} + \sum_{(b,c)\in PinPenaltyCombi} \lambda_{b,c} \cdot x_{b,c} \tag{2}$$

s.t.

$$\sum_{b\in B} x_{b,c} = 1, \qquad \forall c \in C \tag{3}$$

$$x_{b,c1} + x_{b,c2} \leq 1, \qquad \forall b \in B, \forall (c1,c2) \in NG\_PAIR \tag{4}$$

$$y_{b1,b2,c1,c2} \geq x_{b1,c1} + x_{b2,c2} - 1, \quad \forall(b1,b2,c1,c2) \in IntervalCombi \tag{5}$$

$$x_{b,c} = 1, \qquad \forall(b,c) \in PinMustCombi \tag{6}$$

$$x_{b,c} \in \{0,1\}, \qquad \forall b \in B, \forall c \in C \tag{7}$$

$$y_{b1,b2,c1,c2} \in \{0,1\}, \qquad \forall(b1,b2,c1,c2) \in IntervalCombi \tag{8}$$

B: the number of platforms

C: the number of occupations

Variable $x_{b,c}$: a variable ($b \in \{1, 2,..., B\}$, $c \in \{1, 2,..., C\}$) that takes a value of 0 or 1 indicating whether the occupation c is allocated to the platform b

Variable $y_{b1,b2,c1,c2}$: a variable that takes a value of 0 or 1 indicating whether the occupation c1 is allocated to the platform b1 and the occupation c2 is allocated to the platform b2

IntervalCombi: a set of two pairs of (platform, occupation) for which time interval cost occurs

PinPenaltyCombi: a set of (platform, occupation) designated as the desired condition

PinMustCombi: A set of (platform, occupation) designated as the absolute condition

NGPAIR: a combination of occupations in which overlap occurs in the same platform (($c1,c2$)∈NGPAIR when a section from start time of day to end time of day of c1 and a section from start time of day to end time of day of c2

overlap).

$\mu_{b1,b2,c1,c2}$: cost (time interval cost) for $(b1,b2,c1,c2) \in$ IntervalCombi

$\lambda_{bc}$: Cost (platform designation violation cost) in the case in which $(b,c) \in$ PinPenaltyCombi is not satisfied

Equation (2) represents an objective function representing minimization of a total of the time interval cost and the platform designation violation cost.

Equation (3) represents a constraint for allocating the occupations to only one platform.

Equation (4) represents a constraint for not allocating two occupations, time periods of which overlap, to the same platform.

Equation (5) represents a constraint of a relation between x and y. Specifically, Equation (5) represents that $y_{b,b2,c1,c2}$ is set to 1 only when both of $x_{b1,c1}$ and $x_{b2,c2}$ are 1 (that is, when the occupation c1 is allocated to the platform b1 and the occupation c2 is allocated to the platform b2) and, otherwise, the $y_{b1,b2,c1,c2}$ is set to 0.

Equation (6) represents a constraint that the absolute condition is satisfied.

Equation (7) represents a constraint that $x_{b,c}$ takes a value of 0 or 1. When the occupation c is allocated to the platform b, $x_{b,c}$ is 1 and, otherwise, $x_{b,c}$ is 0.

Equation (8) represents a constraint that $y_{b1,b2,c1,c2}$ takes a value of 0 or 1. When the occupation c1 is allocated to the platform b1 and the occupation c2 is allocated to the platform b2, $y_{b1,b2,c1,c2}$ is 1 and, otherwise, $y_{b1,b2,c1,c2}$ is 0.

Note that the above formulation is an example. Other objective functions and constraint equations may be used.

The platform schedule optimizer 240 minimizes or quasi-minimizes the objective function (an evaluation function) of (2) to satisfy the constraints of (3) to (8) to calculate an optimum solution or a quasi-optimum solution of the variable $(x_{b,c})$. As a solution method, a mathematical programming solver such as GurobiOptimizer and CPLEX may be used or a metaheuristic solution such as a gradient method, Simulated Annealing, or Genetic Algorithm may be used.

When not all of the constraints can be satisfied with respect to the mathematical model, the platform schedule optimizer 240 generates a reason of failure in satisfying the constraints as failure information.

As a result of calculating the optimum solution or the quasi-optimum solution of the variable $(x_{b,c})$, the platform schedule optimizer 240 generates, as a platform schedule, allocation information indicating to which platforms the occupations are allocated. The platform schedule optimizer 240 stores the generated platform schedule in the platform schedule DB 450. When the failure information is generated, the platform schedule optimizer 240 stores the failure information in the failure information DB 460.

FIG. 11 shows an example of the platform schedule generated by the platform schedule optimizer 240. In this example, each of three hundred occupations in total, that is, occupations 1 to 300, is allocated to any one of a plurality of platforms.

The platform schedule optimizer 240 may generate an initial solution in advance and solve the optimization problem starting from the initial solution. Consequently, the objective function can be optimized or quasi-optimized in a short time period.

For example, the platform schedule optimizer 240 sorts the occupations in the order of arrival times of day. The platform schedule optimizer 240 allocates, in the order of arrival times of day, the occupations to platforms to which the occupations can be allocated or allocates the occupations to platforms in which an increase in cost is the smallest among the platforms to which the occupations can be allocated. The platform schedule optimizer 240 repeats this operation to create the initial solution. Such a method of generating the initial solution is called greedy method.

After creating the initial solution with the greedy method, the platform schedule optimizer 240 may use a method of gradually reducing the value of the cost (the value of the objective function) using a method of neighbor search. In this case, the platform schedule optimizer 240 may perform the neighbor search using a method called neighbor operation such as moving operation, exchanging operation, or Ejection Chain operation.

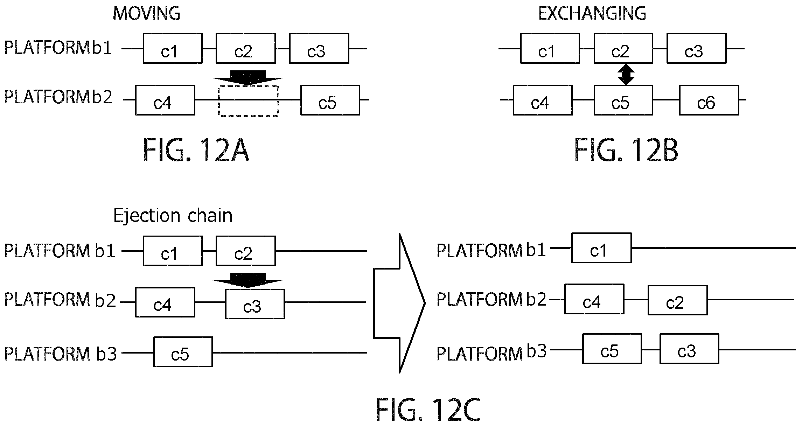

In FIGS. 12A to 12C, examples of various kinds of neighbor operation are shown. FIG. 12A shows an example of the moving operation. The moving operation is operation for moving certain occupation from a certain platform to another platform b2. In the example shown in FIG. 12A, the occupation c2 is moved from the platform b1 to the platform b2.

FIG. 12B shows an example of the exchanging operation. The exchanging operation is operation for exchanging occupation present in a certain platform and occupation present in another platform. In the example shown in FIG. 12B, the occupation c2 present in the platform b1 and the occupation c5 present in the platform b2 are exchanged.

FIG. 12C shows an example of the Ejection Chain operation. The Ejection Chain operation is operation for, when moving certain occupation from a platform to another platform, when another occupation is already present in the other platform, further moving the other occupation according to the other platform. In the example shown in FIG. 12C, when the occupation c2 is moved from the platform b1 to the platform b2, another occupation c3 already present in the platform b2 is moved according to the platform b3. These movements being repeatedly performed in a linked manner is also called Ejection Chain operation.

When the user has already created a platform schedule, the platform schedule may be set as an initial solution. The optimization problem may be solved starting from the initial solution. In that case, a part of information "the occupation c1 is allocated to the platform b1" in the platform schedule created by the user may be set as a platform designation condition (a desired condition or an absolute condition).

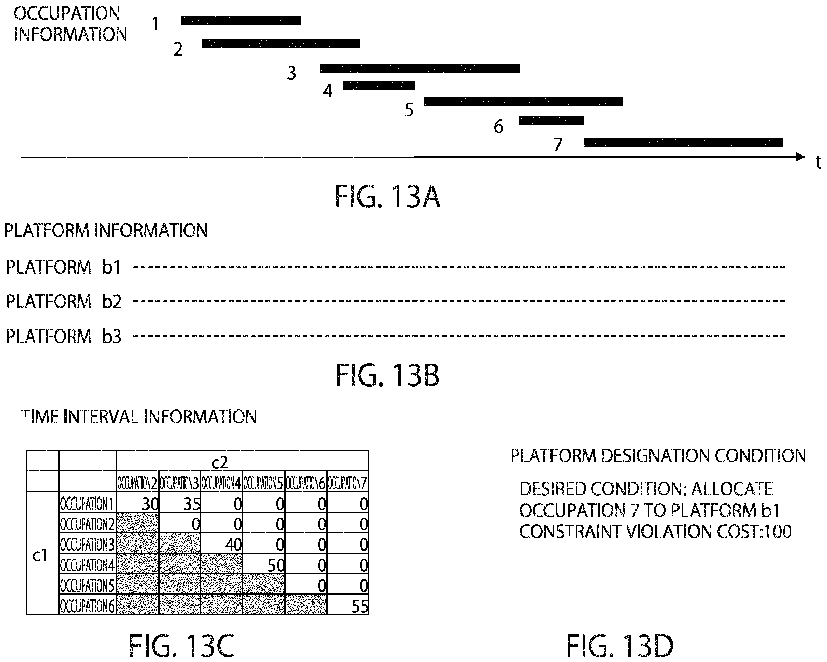

FIGS. 13A to 13D are diagrams for explaining specific examples of the platform schedule creation. FIG. 13A schematically shows occupation information including seven occupations (occupation 1 to occupation 7). The seven occupations may be occupations by trains different from one another or a part of the occupations may be occupations by the same train. The horizontal axis represents time of day. Right ends of the occupations correspond to arrival events of the trains. Times of day corresponding to the arrival events are times of day of arrival of the trains. Left ends of the occupations correspond to leave events of the trains. Times of day corresponding to the leave events are times of day of leave of the trains.

FIG. 13B shows an example of platform information including three platforms (b1, b2, and b3). In this example, it is assumed that the seven occupations shown in FIG. 13A are allocated to three platforms shown in FIG. 13B.

FIG. 13C shows an example of time interval cost present between the platforms b1 and b2. In this example, the time interval cost occurs only in the following cases. The time interval cost occurs only in the case of a pair of the platforms b1 and b2. The time interval cost does not occur in the case of a pair of the platforms b1 and b3 and a pair of the platforms b2 and b3.

The time interval cost is 30 when the occupation 1 is allocated to the platform b1 and the occupation 2 is allocated to the platform b2.

The time interval cost is 35 when the occupation 1 is allocated to the platform b1 and the occupation 3 is allocated to the platform b2.

The time interval cost is 40 when the occupation 3 is allocated to the platform b1 and the occupation 4 is allocated to the platform b2.

The time interval cost is 50 when the occupation 4 is allocated to the platform b1 and the occupation 5 is allocated to the platform b2.

The time interval cost is 55 when the occupation 6 is allocated to the platform b1 and the occupation 7 is allocated to the platform b2.

Note that, when $\mu_{b1,b2,c1,c2}=\mu_{b2,b1,c1,c2}$ holds and c1=c2, since the time interval cost does not occur, in FIG. 13C, only the case of c1<c2 is shown. For simplification, the time interval cost is considered to be the same when the occupation c1 is allocated to the platform b1 and the occupation c2 is allocated to the platform b2 and when the occupation c1 is allocated to the platform b2 and the occupation c2 is allocated to the platform b1. However, it is also conceivable that the time interval cost is different in both the cases.

FIG. 13D shows an example of platform designation conditions. As the desired condition, the occupation 7 is allocated to the platform b1 as much as possible. Cost 100 is designated as the platform designation violation cost in the case in which the desired condition is not satisfied.

In the conditions shown in FIGS. 13A to 13D, an example in the case in which the occupations 1 to 7 are allocated by the greedy method and an example in the case in which the occupations 1 to 7 are allocated in this approach are shown.

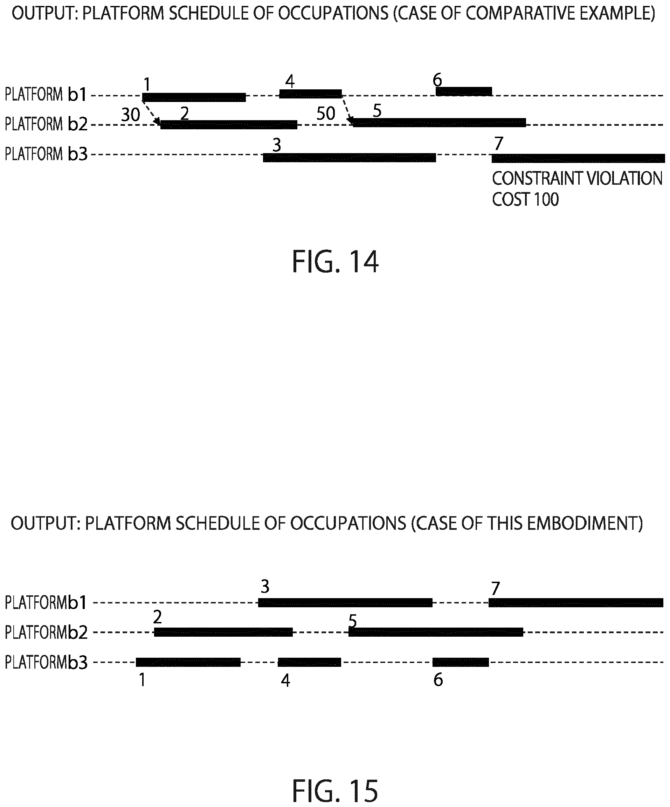

FIG. 14 shows, as a comparative example, an example of an allocation result in the case in which the greedy method is used. On a screen in which the vertical axis indicates a platform and the horizontal axis indicates time of day, occupations are displayed as line segments having time widths. The occupations 1, 4, and 6 are allocated to the platform b1. The occupations 2 and 5 are allocated to the platform b2. The occupation 7 is allocated to the platform b3.

A pair of the occupations 1 and 2, a pair of the occupations 1 and 5, a pair of the occupations 4 and 2, a pair of the occupations 4 and 5, a pair of the occupations 6 and 2, and a pair of the occupations 6 and 5 are present with respect to the platforms b1 and b2. Judging from the time interval information shown in FIG. 13C, among these pairs, time interval cost of 30 occurs in the pair of the occupations 1 and 2 and time interval cost of 50 occurs in the pair of the occupations 4 and 5. Time interval cost does not occur in the other pairs. Accordingly, a sum of the time interval costs is 30+50=80. The allocation of the occupation 7 does not satisfy the platform designation conditions shown in FIG. 13D. Platform designation violation cost 100 occurs. As a result, total cost of the platform schedule is 80+100=180.

FIG. 15 shows an example of an allocation result in this approach. On a screen in which the vertical axis indicates a platform and the horizontal axis indicates time of day, occupations are displayed as line segments having time widths. The occupations 3 and 7 are allocated to the platform b1. The occupations 2 and 5 are allocated to the platform b2. The occupations 1, 4, and 6 is allocated to the platform b3.

A pair of the occupations 3 and 2, a pair of the occupations 3 and 5, a pair of the occupations 7 and 2, and a pair of the occupations 7 and 5 are present with respect to the platforms b1 and b2. In all the pairs, since time interval cost is not defined in the time interval information shown in FIG. 13C, time interval cost is 0.

The occupation 7 is allocated to the platform 1b and the desired condition is satisfied. Therefore, the platform designation violation cost is also 0. As a result, total cost of the platform schedule is 0+0=0. Accordingly, it is seen that a best platform schedule is obtained.

The output device 500 is an output GUI that presents information to the user. The output device 500 reads out the platform schedule from the platform schedule DB 450 and displays the platform schedule on a screen. The output device 500 reads out the failure information from the failure information DB 460 and displays the failure information on the screen. The output device 500 may be a communication device. In this case, the output device 500 may transmit the platform schedule or the failure information or both of the platform schedule and the failure information to a terminal of the user.

The platform schedule displayed on the output device 500 may be the platform schedule of the text format shown in FIG. 11 or may be the platform schedule of the graph format shown in FIG. 15. In the case of the graph format shown in FIG. 15, the line segments may be colored. For example, the line segments of the same group may be colored in the same color and clearly represented. Examples of the same group include a group in the up direction, a group in the down direction, and a group of a train type.

An example of the failure information generated by the platform schedule optimizer 240 when a solution satisfying the constraint cannot be obtained is explained.

It is conceived that an initial solution is generated by the greedy method first and, thereafter, the objective function (2) is solved. The initial solution sometime cannot be obtained at a point in time when the initial solution is generated by the greedy method. For example, a plurality of occupations sometimes cannot be arranged without overlap in the same platform. In this case, as the failure information, the platform schedule optimizer 240 generates an error message indicating that "since the number of occupations is too large, the plurality of occupations cannot be allocated without overlap in the same platform". The platform schedule optimizer 240 outputs the generated error message to the output device 500.

When an interval equal to or larger than the minimum time interval n cannot be spaced between a part of occupations, the platform schedule optimizer 240 outputs an error message indicating that "a minimum time interval cannot be spaced between the occupation c1 and the occupation c2" while showing a provisional schedule for allocating the plurality of occupations set as schedule targets to the platforms. Alternatively, when overlap occurs in the same platform between a part of the occupations, the platform schedule optimizer 240 outputs an error message indicating that "the occupation c1 and the occupation c2 are in the same platform but time periods thereof overlap" while showing a provisional schedule for allocating the plurality of occupations set as schedule targets to the platforms. The provisional schedule is generated by relaxing a part of the constraints and based on a solution obtained based on the relaxed constraints, for example, when a search cannot be advanced halfway in solving the objective function.

When a part of the occupations cannot satisfy the absolute condition of the platform designation conditions, the platform schedule optimizer 240 outputs an error message indicating that "the occupation c1 does not satisfy the platform designation conditions" while showing a provisional schedule for allocating the plurality of occupations set as schedule targets to the platforms.

Even when successfully generating a platform schedule satisfying the constraints, when the platform schedule optimizer 240 cannot create a platform schedule without a total cost (time interval cost is non-negative), the platform schedule optimizer 240 may generate and output a warning message. For example, the platform schedule optimizer 240 may output a warning message indicating that "time interval cost x occurs between the occupation 1 and the occupation 2". Similarly, even when successfully generating a platform schedule satisfying the constraints, when platform designation violation cost is non-negative, the platform schedule optimizer 240 may generate and output a warning message indicating that "platform designation violation cost x occurs in the occupation c1".

The platform schedule optimizer 240 may generate information other than the platform schedule and the failure information and display the information on the output device 500.

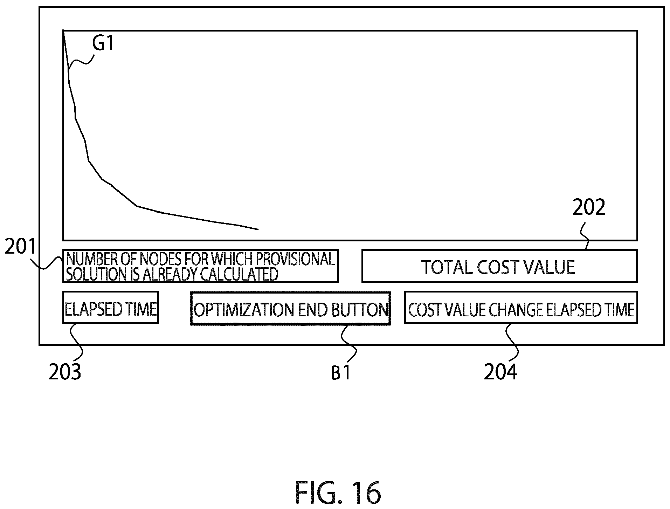

FIG. 16 shows another example of a display screen of the output device 500. FIG. 16 shows a change in a total cost value of a provisional solution (a solution halfway in processing) at every time of day from a solution search start by the platform schedule optimizer 240. A graph G1 is a graph in which the vertical axis indicates total cost of the provisional solution and the horizontal axis indicates a time period from the search start. After the search start, a graph of a total cost value is drawn in, for example, five second units. The graph G1 is started from a maximum value of the total cost. A maximum value of the search time on the horizontal axis is given in advance.

In a field 201, the number of occupations (the number of nodes) for which the provisional solution is already calculated is displayed. A value in the field 201 is updated every time the provisional solution is calculated. The number of nodes is an integer value.

In a field 202, a halfway total cost value is displayed. A value in the field 202 is updated every time the total cost value is calculated. Decimal places may be rounded to an integer value (for example, rounded off).

In a field 203, a time period from the start of the search is displayed. As an example, the time period is in second units and may be in other units. As an example, a format of the time period is MM:SS. MM indicates minute and SS indicates second. The format of the time period may be other formats.

An optimization end button B1 is a button for the user to instruct a search end. When the user presses the optimization end button B1, the platform schedule optimizer 240 sets the provisional solution at that point in time as an end solution and ends the search. The platform schedule optimizer 240 generates a platform schedule based on the end solution. When occupation not satisfying the constraints is present, the platform schedule optimizer 240 may generate the failure information.

A field 204 represents a time period elapsed since the total cost value changes at the nearest time. A value in the field 204 is not updated while the same value continues since the total cost value changes at the nearest time. As an example, a format of the time period is MM:SS. MM represents minute and SS represents second. The format of the time period may be other formats.

Information concerning the created platform schedule may be added to a transport schedule. A transport schedule added with the platforms of the trains in the current station may be displayed on the output device 500.

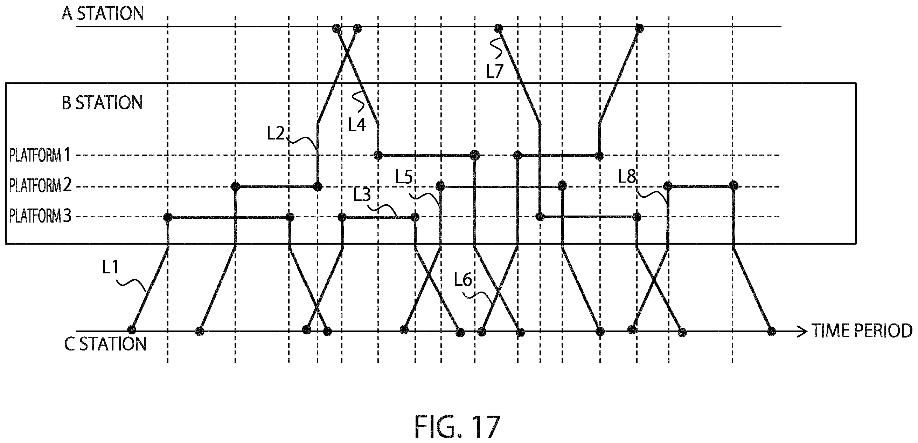

FIG. 17 shows an example in which the B station is set as a schedule target station in the transport schedule used in the explanation of FIG. 4 and the information concerning the platforms of the trains in the B station determined by this approach is added. It is determined that the trains of the train lines L1, L3, and L7 use the platform 3 in the B station. It is determined that the trains of the train lines L2, L5, and L8 use the platform 2 in the B station. The trains of the train lines L4 and L6 use the platform 1 in the B station.

In FIG. 17, an example is shown in which the platforms of the trains are determined for the B station. However, platforms may be determined for the A station and the C station in the same manner and information concerning the determined platforms may be added to the transport schedule. In FIG. 17, an output method for not displaying, in default, detailed leave and arrival information of the B station and, when the B station is clicked, displaying the detailed platform schedule of the B station shown in FIG. 17 may be adopted.

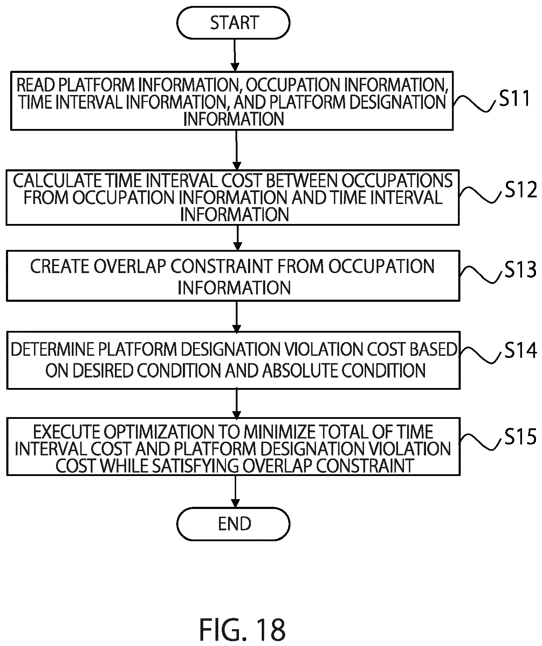

FIG. 18 is a flowchart of an example of the operation of the platform schedule creation apparatus 101. The schedule condition creator 200 reads out the platform information, the time interval information, the occupation information, and the platform designation information from the platform information DB 310, the time interval information DB 330, the occupation information DB 320, and the platform designation information DB 340 (step S11).

The time interval condition processor 210 calculates, based on the occupation information and the time interval information, time interval costs of pairs of occupations with respect to pairs of platforms (step S12).

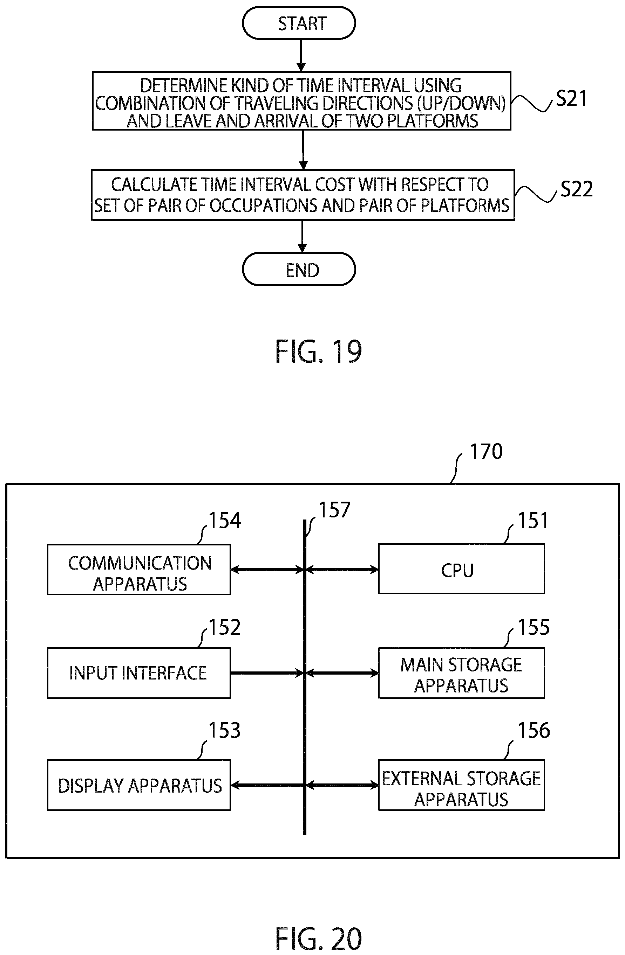

FIG. 19 shows a detailed flowchart of step S12. First, in step S21, the time interval condition processor 210 determines, based on a combination of traveling directions (up/down) and leave and arrival of each of two platforms, a kind of a time interval between the platforms. As an example, the time interval condition processor 210 determines eight kinds of an arrival-arrival continuation time interval, an arrival-arrival opposite-direction time interval, an arrival-leave continuation time interval, an arrival-leave opposite-direction time interval, a leave-arrival continuation time interval, a leave-arrival opposite-direction time interval, a leave-leave continuation time interval, and a leave-leave opposite-direction time interval. In the subsequent step S22, the time interval condition processor 210 combines all the occupations to generate a plurality of pairs of occupations and combines all the platforms to generate a plurality of pairs of platforms. The time interval condition processor 210 combines the plurality of pairs of occupations and the plurality of pairs of platforms and generates a plurality of sets of the pairs of occupations and the pairs of platforms. The time interval condition processor 210 specifies all relevant kinds of time intervals about the generated sets and calculates element costs of the specified kinds of the time intervals. The time interval condition processor 210 totals the calculated element costs and calculates time interval cost

Referring back to FIG. 18, the overlap constraint processor 220 inspects, based on the occupation information, whether there is overlap of time periods concerning all the pairs of occupations. About the pairs of occupations having overlapping time periods, the overlap constraint processor 220 creates an overlap constraint for not allocating the pairs of occupations to the same platform (step S13).

The platform condition processor 230 determines, based on the platform designation conditions (the desired condition and the absolute condition), platform designation violation cost, which is cost in the case in which the desired condition is not satisfied. Although the cost in the case in which the desired condition is not satisfied is determined, platform designation violation cost in the case in which the absolute condition is not satisfied may be defined. For example, a value of the platform designation violation cost may be determined as a sufficiently large value or ∝.

The platform schedule optimizer 240 allocates the occupations to any one of the plurality of platforms to minimize or quasi-minimizing a total of the time interval cost and the platform designation violation cost while satisfying the overlap constraint. The platform schedule optimizer 240 generates a platform schedule indicating a result of allocating the occupations to any one of the platforms and displays the platform schedule on the output device 500 via the platform schedule DB 450. When the constraints (the overlap constraint and the absolute condition) are not satisfied about a part of the occupations, the platform schedule optimizer 240 may display, on the output device 500, via the failure information DB 460, information indicating that the occupation cannot be allocated.

As explained above, according to this approach, it is possible to create a platform schedule while satisfying various constraints. For example, it is possible to create a practical platform schedule considering various constraints such as a constraint meaning that at least n minutes are always spaced between a pair of occupations, a constraint meaning that m minutes are spaced between a pair of occupations as much as possible, an absolute condition for certain occupation, and a desired condition for certain occupation.

(Hardware Configuration)

FIG. 20 illustrates a hardware configuration of the platform schedule creation apparatus (information processing device) 101 according to the present approach. The information processing device 101 according to the present approach is constructed of a computer apparatus 150. The computer apparatus 150 is provided with a CPU 151, an input interface 152, a display device 153, a communication device 154, a main storage 155 and an external storage device 156, which are mutually connected by a bus 157.

The CPU (central processing unit) 151 executes a computer program for implementing the above-mentioned respective functional components of the information processing device 101 on the main storage 155. The CPU 151 executes the computer program and thereby implements the respective functional components.

The input interface 152 is a circuit for inputting operation signals from the input device such as a keyboard, mouse, and touch panel or the like into the information processing device 101. The input device 100 that carries out the input function can be constructed on the input interface 154.

The display device 153 displays data or information outputted from the information processing device 101. The display device 153 is, for example, an LCD (Liquid Crystal Display), a CRT (Cathode Ray Tube), and a PDP (plasma display), but the display device 153 is not limited thereto. The data or information outputted from computer apparatus 150 can be displayed by this display device 153. The output device 500 can be constructed on the display device 153.

The communication device 154 is a circuit for the information processing device 101 to communicate with the external device by wireless or wired means. Information can be inputted from the external device via the communication device 154. The information inputted from the external device can be stored in the DB. The input device 100 or the output device 500 that carries out the communication function can be constructed on the communication device 154.

The main storage 155 stores a program that implements processing of the present approach, data necessary to execute the program and data generated by executing the program. The program is developed and executed on the main storage 155. The main storage 155 may be, for example, RAM, DRAM or SRAM, but it is not limited to this. The various DBs and the storage in each approach may be constructed on the main storage 155.

The external storage device 156 stores the above-described program and data necessary to execute the program, data generated by executing the program or the like. The program and data are read into the main storage 155 during processing of the present approach. The external storage device 156 is, for example, a hard disk, an optical disk, a flash memory or a magnetic tape, but it is not limited to this. The various DBs and the storage in each approach may be constructed on the external storage device 156.

Note that the above-described program may be pre-installed in the computer apparatus 150 or may be stored in a storage medium such as a CD-ROM. The program may be uploaded on the Internet.

Note that the computer apparatus 150 may be provided with one or a plurality of processors 151, input interfaces 152, display devices 153, communication devices 154 and main storages 155, and peripheral devices such as a printer and a scanner may be connected thereto.

In addition, the information processing device 101 may be constructed of the single computer apparatus 150 or may be configured as a system composed of a plurality of mutually connected computer apparatuses 150.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. An information processing apparatus comprising a platform selector configured to select a platform occupied by a vehicle from a plurality of platforms based on platform information including the plurality of platforms and occupation information including a time period in which at least one vehicle occupies at least one of the platforms.

Clause 2. The information processing apparatus according to clause 1, wherein the platform selector selects, the platform occupied by the vehicle based on a constraint of time intervals spaced between a plurality of time periods in which a plurality of different platforms are occupied.

Clause 3. The information processing apparatus according to clause 1, wherein the platform selector selects the platform occupied by the vehicle, based on a constraint of time intervals spaced between a plurality of time periods in which a same platform is occupied.

Clause 4. The information processing apparatus according to clause 2 or 3, wherein the constraint of the time intervals includes that a first time interval or more is spaced between the plurality of time periods.

Clause 5. The information processing apparatus according to clause 2 or 3, wherein the constraint of the time interval includes that a time period of second time interval or more is spaced between the plurality of time periods as much as possible.

Clause 6. The information processing apparatus according to clause 5, wherein
the platform selector calculates first cost when the second time interval or less is spaced between the plurality of time period, and
the platform selector selects the platform occupied by the vehicle based on the first cost.

Clause 7. The information processing apparatus according to any one of clauses 1 to 6, wherein the platform selector selects the platforms occupied by the plurality of vehicles including a first vehicle, based on a first constraint including selecting a first platform which is one of the plurality of platforms for the first vehicle.

Clause 8. The information processing apparatus according to any one of clauses 1 to 6, wherein the platform selector selects the platforms occupied by the plurality of vehicles including a second vehicle, based on a second constraint including not selecting a second platform which is one of the plurality of platforms, for the second vehicle.

Clause 9. The information processing apparatus according to any one of clauses 1 to 6, wherein the platform selector selects the platforms occupied by the plurality of vehicles including a third vehicle, based on a third constraint including selecting a third platform which is one of the plurality of platforms, for the third vehicle as much as possible.

Clause 10. The information processing apparatus according to any one of clauses 1 to 6, wherein the platform selector selects the platforms occupied by the plurality of vehicles including a fourth vehicle, based on a fourth constraint including not selecting a fourth platform which is one of the plurality of platforms, for the fourth vehicle as much as possible.

Clause 11. The information processing apparatus according to clause 7, wherein
the platform selector calculates second cost in a case that the platform selector selects a platform other than the first platform for the first vehicle, and
the platform selector selects the platform occupied by the plurality of vehicles including the first vehicle, based on the second cost.

Clause 12. The information processing apparatus according to any one of clauses 2 to 6, wherein the time intervals spaced between the plurality of time periods includes at least one of
a time interval between arrival time of a vehicle occupying one of the plurality of time periods and arrival time of a vehicle occupying another of the plurality of time periods,
a time interval between arrival time of the vehicle occupying one of the plurality of times and leave time of the vehicle occupying the other of the plurality of times,
a time interval between leave time of the vehicle occupying one of the plurality of time periods and arrival time of the vehicle occupying the other of the plurality of time periods, and
a time interval between leave time of day of the vehicle occupying one of the plurality of time periods and the leave time of the vehicle occupying the other of the plurality of time periods.

Clause 13. The information processing apparatus according to any one of clauses 2 to 6, wherein the constraint of the time interval spaced between the plurality of time periods includes
a constraint used when a traveling direction of a vehicle occupying one of the plurality of time periods and a traveling direction of a vehicle occupying another of the plurality of time periods are same, and
a constraint used when the raveling direction of the vehicle occupying one of the plurality of time periods and the traveling direction of the vehicle occupying another of the plurality of time periods are different.

Clause 14. The information processing apparatus according to any one of clauses 1 to 13, wherein the platform selector selects the platform occupied by the vehicle, based on an attribute of the vehicle.

Clause 15. The information processing apparatus according to clause 14, wherein the attribute includes at least one of a route, a form, a traveling direction, a type, regular/irregular, a traveling classification, and a number of cars of the vehicle.

Clause 16. The information processing apparatus according to clause 14 or 15, wherein
the platform information designates an attribute of a vehicle capable of occupying a first platform of the plurality of platforms, and
the platform selector selects the first platform for the vehicle having the attribute.

Clause 17. The information processing apparatus according to any one of clauses 1 to 16, wherein the platform selector selects one of the plurality of platforms for the vehicle.

Clause 18. An information processing method comprising:
selecting a platform occupied by a vehicle from a plurality of platforms based on platform information including a plurality of platforms and occupation information including a time period in which at least one vehicle occupies at least one of the platforms.

Clause 19. A non-transitory computer readable medium having a computer program stored therein which causes a computer executing the computer program to perform processes comprising:
selecting a platform occupied by a vehicle from a plurality of platforms based on platform information including the plurality of platforms and occupation information including a time period in which at least one vehicle occupies at least one of the platforms.

Clause 20. A method of displaying information on a screen, comprising
displaying platform information including a plurality of platforms and result information indicating which of the plurality of platforms is selected for at least one vehicle on the screen.

**Claims**

1. An information processing apparatus comprising a platform selector configured to select a platform occupied by a vehicle from a plurality of platforms based on platform information including the plurality of platforms and occupation information including a time period in which at least one vehicle occupies at least one of the platforms.

2. The information processing apparatus according to claim 1, wherein the platform selector selects, the platform occupied by the vehicle based on a constraint of time intervals spaced between a plurality of time periods in which a plurality of different platforms are occupied.

3. The information processing apparatus according to claim 1, wherein the platform selector selects the platform occupied by the vehicle, based on a constraint of time intervals spaced between a plurality of time periods in which a same platform is occupied.

4. The information processing apparatus according to claim 2 or 3, wherein the constraint of the time intervals includes that a first time interval or more is spaced between the plurality of time periods.

5. The information processing apparatus according to claim 2 or 3, wherein the constraint of the time interval includes that a time period of second time interval or more is spaced between the plurality of time periods as much as possible.

6. The information processing apparatus according to claim 5, wherein
the platform selector calculates first cost when the second time interval or less is spaced between the plurality of time period, and
the platform selector selects the platform occupied by the vehicle based on the first cost.

7. The information processing apparatus according to any one of claims 1 to 6, wherein the platform selector selects the platforms occupied by the plurality of vehicles including a first vehicle, based on a first constraint including selecting a first platform which is one of the plurality of platforms for the first vehicle.

8. The information processing apparatus according to any one of claims 1 to 6, wherein the platform selector selects the platforms occupied by the plurality of vehicles including a second vehicle, based on a second constraint including not selecting a second platform which is one of the plurality of platforms, for the second vehicle.

9. The information processing apparatus according to any one of claims 1 to 6, wherein the platform selector selects the platforms occupied by the plurality of vehicles including a third vehicle, based on a third constraint including selecting a third platform which is one of the plurality of platforms, for the third vehicle as much as possible.

10. The information processing apparatus according to any one of claims 1 to 6, wherein the platform selector selects the platforms occupied by the plurality of vehicles including a fourth vehicle, based on a fourth constraint including not selecting a fourth platform which is one of the plurality of platforms, for the fourth vehicle as much as possible.

11. The information processing apparatus according to claim 7, wherein
the platform selector calculates second cost in a case that the platform selector selects a platform other than the first platform for the first vehicle, and
the platform selector selects the platform occupied by the plurality of vehicles including the first vehicle, based on the second cost.

12. The information processing apparatus according to any one of claims 2 to 6, wherein the time intervals spaced between the plurality of time periods includes at least one of
a time interval between arrival time of a vehicle occupying one of the plurality of time periods and arrival time of a vehicle occupying another of the plurality of time periods,
a time interval between arrival time of the vehicle occupying one of the plurality of times and leave time of the vehicle occupying the other of the plurality of times,
a time interval between leave time of the vehicle occupying one of the plurality of time periods and arrival time of the vehicle occupying the other of the plurality of time periods, and
a time interval between leave time of day of the vehicle occupying one of the plurality of time periods and the leave time of the vehicle occupying the other of the plurality of time periods.

13. The information processing apparatus according to any one of claims 2 to 6, wherein the constraint of the time interval spaced between the plurality of time periods includes
a constraint used when a traveling direction of a vehicle occupying one of the plurality of time periods and a traveling direction of a vehicle occupying another of the plurality of time periods are same, and
a constraint used when the raveling direction of the vehicle occupying one of the plurality of time periods and the traveling direction of the vehicle occupying another of the plurality of time periods are different.

14. The information processing apparatus according to any one of claims 1 to 13, wherein the platform selector selects the platform occupied by the vehicle, based on an attribute of the vehicle.

15. The information processing apparatus according to claim 14, wherein the attribute includes at least one of a route, a form, a traveling direction, a type, regular/irregular, a traveling classification, and a number of cars of the vehicle.

16. The information processing apparatus according to claim 14 or 15, wherein
the platform information designates an attribute of a vehicle capable of occupying a first platform of the plurality of platforms, and
the platform selector selects the first platform for the vehicle having the attribute.

17. The information processing apparatus according to any one of claims 1 to 16, wherein the platform selector selects one of the plurality of platforms for the vehicle.

18. An information processing method comprising:
selecting a platform occupied by a vehicle from a plurality of platforms based on platform information including a plurality of platforms and occupation information including a time period in which at least one vehicle occupies at least one of the platforms.

19. A non-transitory computer readable medium having a computer program stored therein which causes a computer executing the computer program to perform processes comprising:
selecting a platform occupied by a vehicle from a plurality of platforms based on platform information including the plurality of platforms and occupation information including a time period in which at least one vehicle occupies at least one of the platforms.

20. A method of displaying information on a screen, comprising

displaying platform information including a plurality of platforms and result information indicating which of the plurality of platforms is selected for at least one vehicle on the screen.

~101

PLATFORM SCHEDULE CREATION APPARATUS

INPUT DEVICE 100

PLATFORM INFORMATION INPUT DEVICE 110

PLATFORM INFORMATION DB 310

SCHEDULE CONDITION CREATOR 200

TIME INTERVAL INFORMATION INPUT DEVICE 130

TIME INTERVAL INFORMATION DB 330

TIME INTERVAL CONDITION PROCESSOR 210

TIME INTERVAL COST DB 410

OCCUPATION INFORMATION INPUT DEVICE 120

OCCUPATION INFORMATION DB 320

OVERLAP CONSTRAINT PROCESSOR 220

OVERLAP CONSTRAINT DB 420

PLATFORM DESIGNATION INFORMATION INPUT DEVICE140

PLATFORM DESIGNATION INFORMATION DB 340

PLATFORM CONDITION PROCESSOR 230

PLATFORM DESIGNATION VIOLATION COST DB 430

PLATFORM SCHEDULE OPTIMIZER 240

PLATFORM SCHEDULE DB 450

FAILURE INFORMATION DB 460

OUTPUT DEVICE 500

FIG. 1

FIG. 2

FIG. 3

PLATFORM INFORMATION
- NUMBER OF PLATFORMS :10
- PLATFORM 1: TARGETING ONLY DOWN OF A ROUTE
- PLATFORM 2: TARGETING ONLY UP OF A ROUTE
  ...
- PLATFORM 10: TARGETING TRAIN INCLUDING FOUR CARS OR LESS

# FIG. 4

OCCUPATION INFORMATION
- TOTAL NUMBER OF OCCUPATIONS :300
  - OCCUPATION 1: ARRIVAL TIME OF DAY 6:00, LEAVE TIME OF DAY 6:03
  (TRAIN 001, 8 CARS, A ROUTE, UP)
  - OCCUPATION 2: ARRIVAL TIME OF DAY 6:05, LEAVE TIME OF DAY 6:08
  (TRAIN 015, 8 CARS, A ROUTE, DOWN)
  ...
  - OCCUPATION 300: ARRIVAL TIME OF DAY 22:00, LEAVE TIME OF DAY 22:03
  (TRAIN 405, 8 CARS, A ROUTE, DOWN)

# FIG. 5

FIG. 6A

FIG. 6B

TIME INTERVAL INFORMATION
 - LEAVE-LEAVE SAME-DIRECTION TIME INTERVAL BETWEEN PLATFORM 1 AND PLATFORM 2,
   n=3 MINUTES, m=23 MINUTES
 - LEAVE-LEAVE OPPOSITE-DIRECTION TIME INTERVAL BETWEEN PLATFORM 1 AND PLATFORM 2,
   n=5 MINUTES, m=25 MINUTES
 - ARRIVAL-LEAVE SAME-DIRECTION TIME INTERVAL BETWEEN PLATFORM 1 AND PLATFORM 2,
   n=4 MINUTES, m=14 MINUTES
 - ARRIVAL-ARRIVAL SAME-DIRECTION TIME INTERVAL BETWEEN PLATFORM 2 AND PLATFORM 2,
   n=5 MINUTES, m=15 MINUTES
   •••

## FIG. 7

PLATFORM DESIGNATION INFORMATION
 • "OCCUPATION 3" IS ALLOCATED TO "PLATFORMS 1 TO 4"
 • "UP" TRAIN IS ALLOCATED TO "PLATFORMS 1 AND 3"
 • "OCCUPATION 4" TRAIN IS ALLOCATED TO "PLATFORM 3" AS MUCH AS POSSIBLE
   •••

## FIG. 8

## FIG. 9

| TIME PERIOD BETWEEN PLATFORM OCCUPATIONS | ELEMENT COST VALUE |
|---|---|
| TIME PERIOD BETWEEN PLATFORM OCCUPATIONS $\geqq$ m | 0 |
| n $\leqq$ TIME PERIOD BETWEEN PLATFORM OCCUPATIONS$<$m | m $-$TIME PERIOD BETWEEN PLATFORM OCCUPATIONS |
| TIME PERIOD BETWEEN PLATFORM OCCUPATIONS$<$n | $+\infty$ (CONSTRAINT VIOLATION) |

# FIG. 10

· TOTAL NUMBER OF OCCUPATIONS :300
  - OCCUPATION 1: PLATFORM 3
  - OCCUPATION 2: PLATFORM 4
  ...
  - OCCUPATION 300: PLATFORM 4

# FIG. 11

MOVING

PLATFORM b1 — | c1 | | c2 | | c3 |

PLATFORM b2 — | c4 | | | | c5 |

## FIG. 12A

EXCHANGING

| c1 | | c2 | | c3 |

| c4 | | c5 | | c6 |

## FIG. 12B

Ejection chain

PLATFORM b1 — | c1 | | c2 |

PLATFORM b2 — | c4 | | c3 |

PLATFORM b3 — | c5 |

PLATFORM b1 — | c1 |

PLATFORM b2 — | c4 | | c2 |

PLATFORM b3 — | c5 | | c3 |

## FIG. 12C

OCCUPATION INFORMATION

## FIG. 13A

PLATFORM INFORMATION

PLATFORM b1 ----------------------------------------------------------------------------------

PLATFORM b2 ----------------------------------------------------------------------------------

PLATFORM b3 ----------------------------------------------------------------------------------

## FIG. 13B

TIME INTERVAL INFORMATION

<table>
<tr><td rowspan="2"></td><td rowspan="2"></td><td colspan="6">c2</td></tr>
<tr><td>OCCUPATION2</td><td>OCCUPATION3</td><td>OCCUPATION4</td><td>OCCUPATION5</td><td>OCCUPATION6</td><td>OCCUPATION7</td></tr>
<tr><td rowspan="6">c1</td><td>OCCUPATION1</td><td>30</td><td>35</td><td>0</td><td>0</td><td>0</td><td>0</td></tr>
<tr><td>OCCUPATION2</td><td></td><td>0</td><td>0</td><td>0</td><td>0</td><td>0</td></tr>
<tr><td>OCCUPATION3</td><td></td><td></td><td>40</td><td>0</td><td>0</td><td>0</td></tr>
<tr><td>OCCUPATION4</td><td></td><td></td><td></td><td>50</td><td>0</td><td>0</td></tr>
<tr><td>OCCUPATION5</td><td></td><td></td><td></td><td></td><td>0</td><td>0</td></tr>
<tr><td>OCCUPATION6</td><td></td><td></td><td></td><td></td><td></td><td>55</td></tr>
</table>

## FIG. 13C

PLATFORM DESIGNATION CONDITION

DESIRED CONDITION: ALLOCATE
OCCUPATION 7 TO PLATFORM b1
CONSTRAINT VIOLATION COST:100

## FIG. 13D

EP 3 851 358 A1

OUTPUT: PLATFORM SCHEDULE OF OCCUPATIONS (CASE OF COMPARATIVE EXAMPLE)

PLATFORM b1
PLATFORM b2
PLATFORM b3

CONSTRAINT VIOLATION
COST 100

FIG. 14

OUTPUT: PLATFORM SCHEDULE OF OCCUPATIONS (CASE OF THIS EMBODIMENT)

PLATFORMb1
PLATFORMb2
PLATFORMb3

FIG. 15

G1

202

201

| NUMBER OF NODES FOR WHICH PROVISIONAL SOLUTION IS ALREADY CALCULATED | TOTAL COST VALUE |
|---|---|

| ELAPSED TIME | OPTIMIZATION END BUTTON | COST VALUE CHANGE ELAPSED TIME |
|---|---|---|

203

B1

204

FIG. 16

FIG. 17

A STATION

B STATION

PLATFORM 1
PLATFORM 2
PLATFORM 3

L1  L2  L3  L4  L5  L6  L7  L8

C STATION

TIME PERIOD

EP 3 851 358 A1

30

```
                    ┌──────────┐
                    │  START   │
                    └──────────┘
                          │
                          ▼
┌─────────────────────────────────────────────────────┐
│ READ PLATFORM INFORMATION, OCCUPATION INFORMATION,    │        S11
│ TIME INTERVAL INFORMATION, AND PLATFORM DESIGNATION   │
│                  INFORMATION                          │
└─────────────────────────────────────────────────────┘
                          │
                          ▼
┌─────────────────────────────────────────────────────┐
│ CALCULATE TIME INTERVAL COST BETWEEN OCCUPATIONS      │        S12
│  FROM OCCUPATION INFORMATION AND TIME INTERVAL        │
│                  INFORMATION                          │
└─────────────────────────────────────────────────────┘
                          │
                          ▼
┌─────────────────────────────────────────────────────┐
│    CREATE OVERLAP CONSTRAINT FROM OCCUPATION          │        S13
│                  INFORMATION                          │
└─────────────────────────────────────────────────────┘
                          │
                          ▼
┌─────────────────────────────────────────────────────┐
│ DETERMINE PLATFORM DESIGNATION VIOLATION COST BASED   │        S14
│   ON DESIRED CONDITION AND ABSOLUTE CONDITION         │
└─────────────────────────────────────────────────────┘
                          │
                          ▼
┌─────────────────────────────────────────────────────┐
│   EXECUTE OPTIMIZATION TO MINIMIZE TOTAL OF TIME      │        S15
│ INTERVAL COST AND PLATFORM DESIGNATION VIOLATION      │
│   COST WHILE SATISFYING OVERLAP CONSTRAINT            │
└─────────────────────────────────────────────────────┘
                          │
                          ▼
                    ┌──────────┐
                    │   END    │
                    └──────────┘
```

## FIG. 18

START

DETERMINE KIND OF TIME INTERVAL USING
COMBINATION OF TRAVELING DIRECTIONS (UP/DOWN)
AND LEAVE AND ARRIVAL OF TWO PLATFORMS
~S21

CALCULATE TIME INTERVAL COST WITH RESPECT TO
SET OF PAIR OF OCCUPATIONS AND PAIR OF PLATFORMS
~S22

END

## FIG. 19

170

| 154 | 157 | 151 |
|---|---|---|
| COMMUNICATION APPARATUS | | CPU |
| 152 | | 155 |
| INPUT INTERFACE | | MAIN STORAGE APPARATUS |
| 153 | | 156 |
| DISPLAY APPARATUS | | EXTERNAL STORAGE APPARATUS |

## FIG. 20

Europäisches
Patentamt

European
Patent Office

Office européen
des brevets

# EUROPEAN SEARCH REPORT

**Application Number**

EP 20 19 5010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 351 453 A1 (HITACHI LTD [JP]) 25 July 2018 (2018-07-25) * figures 2, 3, 4-1, 4-2, 4-3 and 11; paragraphs [0016], [0020], [0040], [0041], [0092] - [0096], [0147] - [0170] and [0175] * | 1-20 | INV. B61L25/08 B61L27/00 |
| A | EP 3 290 290 A1 (HITACHI LTD [JP]) 7 March 2018 (2018-03-07) * paragraphs [0034] - [0037] * | 1-20 | |

TECHNICAL FIELDS
SEARCHED (IPC)

B61L

The present search report has been drawn up for all claims

| Place of search | Date of completion of the search | Examiner |
|---|---|---|
| Munich | 19 February 2021 | Plützer, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 5010

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2021

| Patent document cited in search report | | Publication date | Patent family member(s) | | Publication date |
|---|---|---|---|---|---|
| EP 3351453 | A1 | 25-07-2018 | EP 3351453 A1 | | 25-07-2018 |
| | | | JP WO2017046933 A1 | | 12-07-2018 |
| | | | WO 2017046933 A1 | | 23-03-2017 |
| EP 3290290 | A1 | 07-03-2018 | EP 3290290 A1 | | 07-03-2018 |
| | | | JP 6472512 B2 | | 20-02-2019 |
| | | | JP WO2016175134 A1 | | 11-01-2018 |
| | | | WO 2016175134 A1 | | 03-11-2016 |

EPO FORM P0459

For more details about this annex : see Official Journal of the European Patent Office, No. 12/82